# DEMANDE DE BREVET EUROPEEN

(11) **EP 2 281 785 A1**
(43) Date de publication de la demande: **09.02.2011**
(21) Numéro de dépôt: 09167389.7
(22) Date de dépôt: 06.08.2009
(51) Int. Cl.: C03B 5/235, C01B 13/02

(54) **Four de fusion du verre**

(71) Demandeur: AGC Glass Europe, 1170 Bruxelles (Watermael-Boitsfort) (BE)
(72) Inventeur: Bioul, François, 6040 Jumet (BE); Douxchamps, Olivier, 6040 Jumet (BE)
(74) Mandataire: Le Vaguerèse, Sylvain Jacques

(57) **Abrégé**

La présente invention concerne un four (12) de fusion du verre chauffé au moyen de brûleurs (13), dans lequel l'énergie de combustion est produite au moins partiellement par oxy-combustion, et dans lequel une partie au moins de l'oxygène utilisé dans les brûleurs (13) est produit par séparation sur une membrane de séparation céramique (18) à partir d'un mélange gazeux comprenant de l'oxygène, l'oxygène issu de la séparation étant directement conduit dans au moins un brûleur (13).

## Description

La présente invention concerne les fours de fusion du verre dans lesquels l'énergie de fusion est produite essentiellement par des brûleurs alimentés en combustible et en oxygène ou en gaz très riche en oxygène. Ces fours sont qualifiés habituellement de four à "oxy-combustion". Elle concerne aussi bien les fours dans lesquels l'oxy-combustion est utilisée de façon complémentaire et que l'on qualifie notamment de "boosting", que les fours dans lesquels l'essentiel sinon la totalité de la combustion est effectuée avec de l'oxygène.

L'oxy-combustion permet un gain énergétique au moins pour la raison que l'énergie des gaz de combustion n'est pas absorbée en partie par l'azote de l'air. Dans les fours traditionnels, même si une partie de l'énergie entraînée avec l'azote est récupérée dans les régénérateurs, les fumées finalement évacuées en entraînent encore une part significative. La présence de l'azote participe à cette perte.

La réduction de la consommation énergétique par unité de production considérée présente en plus l'avantage de limiter par voie de conséquence les émissions de dioxyde de carbone qui peut atteindre 25%, et donc de répondre aux exigences règlementaires dans ce domaine.

La présence d'azote est aussi source de formation d'oxydes dits NOx, dont l'émission est pratiquement interdite en raison des dommages liés à la présence de ces composés dans l'atmosphère. Les utilisateurs se sont efforcés de faire fonctionner les fours dans les conditions conduisant à des émissions aussi limitées que possible. Dans le cas des fours de verrerie, ces pratiques ne suffisent pas pour satisfaire aux normes très sévères en vigueur, et il est nécessaire de procéder à une dépollution coûteuse des fumées par l'usage de catalyseurs.

L'utilisation d'oxygène permet de s'affranchir des problèmes liés à l'azote de l'air, sinon en totalité, au moins dans une très large proportion de l'ordre de 90%.

En dépit des avantages énoncés ci-dessus, l'utilisation de l'oxy-combustion dans les grands fours verriers reste à développer. Les raisons sont de plusieurs natures. Tout d'abord l'utilisation d'oxygène est nécessairement plus coûteuse que celle d'air. Par ailleurs le bilan économique de la mise en oeuvre de l'oxy-combustion pour être positif requiert la maîtrise de différents aspects techniques, et en particulier celle des flux thermiques comprenant la récupération d'une part significative de la chaleur des fumées.

La technique décrite dans la demande non publiée PCT/EP2009/053500 permet d'optimiser le rendement énergétique de l'ensemble en proposant un mode de récupération de la chaleur des fumées pour préchauffer l'oxygène utilisé. Cette optimisation implique néanmoins la mise en oeuvre de dispositifs spécialement adaptés, notamment pour résister de manière satisfaisante à la corrosion liée à la présence d'oxygène chaud.

L'énergie récupérée pour chauffer l'oxygène n'épuise pas celle véhiculée par les fumées.

Dans la pratique l'énergie des fumées est supérieure à celle requise pour amener les différentes alimentations du four aux températures utiles pour le fonctionnement. Il s'agit de chauffer d'abord le combustible. Il s'agit aussi de chauffer l'oxygène. Il s'agit encore du préchauffage des matières premières. Pour tous ces éléments les conditions de l'échange qui tiennent compte de la nature des constituants, ou de la manière dont ils peuvent être utilisés, limite l'énergie qui peut être récupérée pour le fonctionnement du four proprement dit.

Le combustible, qu'il soit liquide ou gazeux, ne peut supporter des températures excessives. La température de l'oxygène est limitée par celle que peuvent supporter les dispositifs dans lesquels il circule. En pratique la résistance des alliages des conduits utilisés ne va pas au-delà de 900-950°C lorsque l'on doit garantir un fonctionnement sur de longues périodes. Les matières premières également ne peuvent supporter un accroissement trop important de leur température sans risque de conduire à des agglomérations qui rendent leur mise en oeuvre plus délicate.

Pour améliorer le bilan économique une solution consiste à intégrer la production d'oxygène sur le site d'utilisation. On s'affranchit de l'achat aux sociétés spécialisées dans sa production. On s'affranchit également soit des moyens d'acheminement, soit de moyens de stockage, soit encore des deux.

La production d'oxygène pose cependant d'autres questions. Les techniques usuelles de production d'oxygène par liquéfaction et distillation à partir d'air, du type de celles utilisées par les grands producteurs de gaz industriels, nécessitent des installations lourdes qui ne peuvent trouver de rentabilité que pour des productions de très grands volumes. Les quantités nécessaires pour l'alimentation de fours verriers, même si elles sont importantes, sont habituellement insuffisantes pour justifier un tel investissement.

Par ailleurs il est connu des techniques de production d'oxygène pour des applications ne requérant que des quantités limitées de ce gaz. Parmi ces techniques il a été proposé d'utiliser la séparation de l'oxygène à partir d'un mélange gazeux, et notamment à partir d'air, au moyen de membranes constituées d'une sélection de matériaux aussi désignés sous le nom d'électrolytes solides, capables de réagir avec l'oxygène pour l'ioniser sur une face de la membrane, de transporter ces ions à travers celle-ci, et de reconstituer l'oxygène gazeux sur l'autre face de la membrane. Des matériaux de ce type sont par exemple décrits dans le brevet US 5,240,480, ou dans la demande WO 2008/024405.

La séparation d'oxygène sur membrane, pour obtenir des rendements significatifs nécessite de procéder à température élevée d'une part, et d'autre part d'entretenir une importante différence de pression partielle en oxygène de part et d'autre de la membrane. Pour ces raisons l'économie de mise en oeuvre de ces techniques est très dépendante du bilan énergétique précis du fonctionnement des installations considérées.

Les inventeurs ont montré que par un choix approprié de conditions, la production d'oxygène par la technique de séparation au moyen des membranes permet de satisfaire aux exigences tant techniques qu'économiques liées aux fours verriers fonctionnant en oxy-combustion ou au moins fonctionnant pour une part significative en mode oxy-combustion.

L'invention concerne donc les fours verriers alimentés au moins en partie en oxy-combustion, et dont au moins une partie de l'oxygène utilisé est produit par séparation sur une membrane de type électrolyte solide, à partir d'un mélange gazeux comprenant de l'oxygène.

Le rendement de la séparation de l'oxygène sur membrane électrolyte solide est dépendant de conditions qui rendent cette opération relativement délicate. En premier le transport ionique dans la membrane nécessite des températures relativement élevées. Pour un transport significatif la température est avantageusement supérieure à 550°C et de façon préférée la température est au moins égale à 600°C.

Si la température est aussi élevée que possible, les limites pratiques sont liées aux dispositifs dans lesquels circulent les gaz en question et particulièrement l'oxygène. Les alliages les plus résistants à l'oxygène chaud, peuvent résister de façon satisfaisante jusqu'aux environs de 950°C. Des dispositifs de ce type, dans la circonstance des échangeurs de chaleur, sont décrits par exemple dans la demande WO 2008/141939. Au-delà de ces températures le risque de dégradation réduit sensiblement la longévité des dispositifs en question. En pratique la température est avantageusement au plus égale à 900°C.

Les fours verriers de fusion requièrent un apport énergétique important. En conséquence la consommation d'oxygène est également relativement importante. L'extraction de l'oxygène doit conduire à des débits élevés et ne nécessiter que des installations compatibles avec un fonctionnement économique. Pour avoir des débits appropriés il est nécessaire de maintenir une différence suffisante de pression partielle d'oxygène de part et d'autre de la membrane.

Si la pression d'alimentation du brûleur peut être relativement faible, de l'ordre de quelques dizaines de kPa, à l'inverse il est nécessaire d'alimenter le dispositif de séparation sous une pression élevée. Plus la différence est grande, plus le rendement du dispositif, toutes choses égales par ailleurs, est important. Pour des raisons pratiques, la pression est cependant limitée. La pression choisie est avantageusement supérieure à 1.10⁶Pa. De façon pratique, notamment en tenant compte de la résistance des membranes il est préférable de ne pas dépasser des pressions de l'ordre de 5.10⁶Pa. Des pressions de 1.10⁶ à 2.10⁶Pa constituent un compromis avantageux entre le rendement d'une part et les difficultés de mise en oeuvre de dispositifs supportant de très hautes pressions.

L'oxygène extrait par séparation sur membrane se trouve dans des conditions de température qui favorisent le bon rendement de la combustion. Par ailleurs aux températures en question il est préférable de limiter le parcours suivi par l'oxygène jusqu'au brûleur pour limiter les risques de dégradation des dispositifs en contact avec cet oxygène. Il est donc particulièrement indiqué d'utiliser l'oxygène immédiatement après son extraction, et donc de localiser les moyens d'extraction comportant la membrane, à proximité des brûleurs du four.

Il est remarquable que dans les techniques précédemment décrites, notamment dans la demande non publiée PCT/EP2009/053500, l'oxygène alimentant l'oxy-combustion devait être chauffé dans des échangeurs spécialement conçus. Ces échangeurs devaient pour les raisons indiquées précédemment être situés à proximité des brûleurs. Dans le mode proposé par l'invention, l'oxygène issu des dispositifs d'extraction est déjà à température élevée. Il est donc possible et avantageux de faire l'économie des échangeurs en question.

L'énergie nécessaire à l'échauffement du mélange gazeux dont l'oxygène est extrait est avantageusement fournie par la chaleur des fumées. Ce transfert s'opère de plusieurs façons, soit par un échange thermique, soit indirectement par utilisation de l'énergie des fumées pour actionner le compresseur conduisant le mélange gazeux dont l'oxygène est extrait dans les conditions adéquates, soit encore de préférence en mettant en jeu ces deux types de transfert.

Si il est envisageable de chauffer directement le mélange gazeux dont l'oxygène est extrait, pour des raisons propres aux appareillages utilisés et à l'économie de l'ensemble il est préférable, comme indiqué plus loin à propos des exemples, de procéder à un double échange. Un transfert de chaleur est réalisé dans un premier échangeur dans lequel circulent les fumées d'une part et un fluide caloporteur d'autre part. Avantageusement ce dernier est constitué d'air.

Le mélange gazeux dont l'oxygène est extrait est réchauffé après compression dans des échangeurs secondaires au moyen du caloporteur chauffé dans le premier échangeur. De manière générale la compression du mélange gazeux s'accompagne d'une élévation de température significative compte tenu de la pression requise pour le passage sur la membrane. Fonction du type de compresseur utilisé il peut être préférable de procéder à un refroidissement du compresseur pour en améliorer l'efficacité. Dans tous les cas, même dans celui du compresseur refroidi, le gaz conserve une température accrue. Partant d'une température ambiante l'élévation de température consécutive à la compression peut atteindre et même dépasser 350°C. En pratique les meilleures conditions d'ensemble conduisent à choisir de préférence une température de l'ordre de 200 à 300°C.

La température des fumées à la sortie de l'échangeur primaire est de préférence maintenue au dessus de celle de condensation des sulfates présents dans les fumées, autrement dit au dessus de 800°C. De cette façon on évite l'encrassement prématuré de l'échangeur. Il faut remarquer à ce propos que le mode de fonctionnement oxy-combustion permet de limiter la teneur en sulfate dans les fumées. La présence de sulfates dans la composition à pour rôle de faciliter l'affinage du verre fondu. Dans la technique de fusion en oxy-combustion la présence d'une forte teneur en eau dans l'atmosphère est un facteur favorable à l'affinage. La teneur en sulfate est donc avantageusement réduite au point que les fumées peuvent être rejetées en respectant les conditions règlementaires sans qu'il soit nécessaire de les désulfurer comme pour les fours fonctionnant de manière traditionnelle en aéro-combustion. Dans ce cas on procède seulement à un dépoussiérage des fumées avant leur rejet.

La température du caloporteur à la sortie de l'échangeur primaire ne dépasse pas celle de sortie des fumées. A titre indicatif la température atteinte par le caloporteur reste inférieure d'environ 50°C à celle des fumées à la sortie de l'échangeur lorsque les flux sont dans le même sens dans l'échangeur, autrement dit lorsque les fumées les plus chaudes se trouvent d'abord au contact du mélange gazeux à température ambiante. De la même façon le réchauffage du mélange comprimé reste à des températures inférieures à celle du caloporteur. Dans cette configuration préférée, la température du mélange gazeux comprimé est encore avantageusement élevée pour atteindre les températures les plus efficaces pour l'extraction de l'oxygène sur la membrane. Cette élévation de température est obtenue par exemple en réchauffant le mélange gazeux dans une chaudière pour atteindre les températures requises pour l'extraction de l'oxygène, allant jusqu'à 900-950°C pour les plus élevées.

Le mélange gazeux à pression et température élevées est ensuite passé sur l'extracteur à membrane. Le rendement d'extraction de la membrane est fonction de la température et de la pression du mélange traité mais aussi de la teneur initiale en oxygène, des débits imposés et bien entendu de l'efficacité de la membrane pour une même surface d'échange.

Sans accroître de manière excessive la surface d'échange de la membrane, ce qui conduit à des investissements trop importants en matériel, les membranes disponibles commercialement permettent d'atteindre par exemple des rendements d'extraction de 70 et même 80% partant d'air atmosphérique.

Le mélange gazeux après l'extraction de la majeure partie de l'oxygène, est toujours à température et pression élevées. Dans le cas où ce mélange initial est de l'air, le gaz après extraction de l'oxygène représente encore au moins 80% du volume initial. L'énergie véhiculée par ce gaz est considérable. Elle est avantageusement reprise dans la technique selon l'invention. Elle peut servir notamment à entraîner l'ensemble turbine compresseur fournissant le mélange gazeux comprimé.

L'oxygène chaud sortant du dispositif d'extraction est avantageusement dirigé immédiatement vers les brûleurs du four. Compte tenu de sa température, il peut être utilisé sans chauffage supplémentaire.

Les dispositifs acheminant l'oxygène chaud jusqu'aux brûleurs doivent pouvoir résister aux conditions particulièrement agressives auxquelles ils sont exposés. Ces conditions particulières limitent de manière drastique les éléments constitutifs de ces dispositifs. Non seulement il est nécessaire de réduire autant que possible la longueur du trajet séparant l'ensemble d'extraction du brûleur, mais encore ces dispositifs doivent comprendre un minimum d'éléments conduisant notamment à des pertes de charge. A titre indicatif il est pratiquement exclu de disposer des vannes pour réguler le débit. Avantageusement ces dispositifs se limitent à des canalisations, éventuellement avec des distributeurs statiques alimentant plusieurs brûleurs.

En dépit des contraintes matérielles liées à l'utilisation de l'oxygène à très haute température il est nécessaire de contrôler le flux d'oxygène récupéré à la sortie des dispositifs d'extraction dans la mesure où ce flux détermine le fonctionnement du ou des brûleurs alimentés. Selon l'invention on procède avantageusement à cette mesure de manière indirecte en déterminant d'une part le taux d'oxygène dans le mélange gazeux d'origine, et d'autre part celui de l'oxygène résiduel à la sortie du dispositif d'extraction. On peut ainsi par différence connaître le flux d'oxygène extrait et envoyé aux brûleurs.

La mesure de la teneur en oxygène du mélange après l'extraction sur la membrane est réalisée par exemple au moyen de sondes du type constitué d'une électrode à base d'oxyde de zirconium telles que commercialisées par la société STG de Cottbus pour la mesure de l'oxygène dans les fumées de combustion.

La mesure du flux d'oxygène extrait sur la membrane étant réalisée, l'alimentation des brûleurs peut être ensuite ajustée en amont du dispositif d'extraction en jouant d'un ou de plusieurs des paramètres susceptibles d'influer sur ce flux : température, pression, débit du mélange gazeux traité.

Dans l'hypothèse où le flux d'oxygène extrait ne pourrait être commandé de manière à alimenter les brûleurs en quantité suffisante, il est possible de compléter ce flux par un apport d'oxygène à partir d'une réserve additionnelle. Dans cette hypothèse il est nécessaire pour ne pas déséquilibrer l'extraction réalisée sur la membrane, de conduire cet oxygène additionnel directement au brûleur et de préférence par un injecteur indépendant.

Quelle que soit la mise en oeuvre choisie pour l'invention, la récupération de l'énergie n'est normalement pas épuisée dans les techniques de production de l'oxygène qui viennent d'être décrites. Les fumées de combustion du four, après échange dans le premier échangeur et dépoussiérage, sont encore à température élevée. Compte tenu de leur abondance il est donc souhaitable de récupérer l'énergie qu'elles véhiculent par exemple pour procéder à une opération de cogénération. Il en est de même du flux gazeux appauvri en oxygène. Après son utilisation dans la compression de l'alimentation, le mélange gazeux est encore à température élevée et peut être utilisé en complément de celui provenant des fumées ; Enfin, on peut aussi y adjoindre les fumées provenant de la chaudière de réchauffage du mélange gazeux comprimé.

L"invention est décrite de manière détaillée dans la suite en faisant référence aux planches de dessins dans lesquelles :
- la figure 1 est un schéma de fonctionnement pour un four oxy-combustion comprenant le chauffage de l'oxygène ;
- la figure 2 est un schéma de fonctionnement selon l'invention ;
- la figure 3 est un diagramme montrant la relation entre l'énergie consommée dans le processus de production de l'oxygène en fonction de diverses conditions de rendement d'extraction des membranes utilisées.

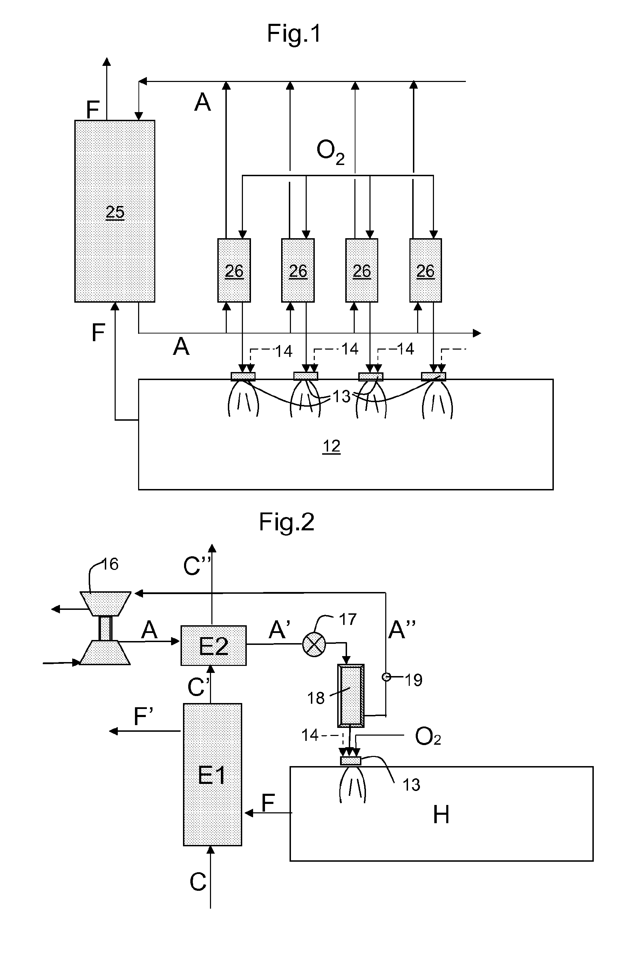

La figure 1 présente un schéma de fonctionnement d'un four oxy-combustion tel que décrit dans la demande PCT/EP 2009/053500.

Le four 12 représenté du type de ceux utilisés dans les installations de production de verre de grande capacité tels que ceux alimentant la production de verre flotté. Il montre de façon schématique 4 brûleurs 13. En pratique dans les grands fours une dizaine de brûleurs sont nécessaires. Le schéma ne présente que la moitié des éléments : brûleurs, circuits et échangeurs situés sur un seul côté du four. Ces éléments sont normalement disposés sur les deux côtés pour une meilleure distribution énergétique sur l'ensemble de la surface du bain.

Les brûleurs reçoivent d'une part le combustible par les canalisations 14. Ils reçoivent d'autre part l'oxygène chaud en provenance d'un ensemble de réchauffage. Il est avantageux de procéder au chauffage de l'oxygène en deux temps compte tenu des exigences propres à cette technique.

L'ensemble comprend la récupération des fumées F sortant du four. Ces fumées passent dans un récupérateur 25 où elles réchauffent un fluide intermédiaire A, par exemple de l'air, de l'azote, du CO₂ ou tout fluide approprié. Ce fluide circule par exemple en boucle entre ce récupérateur 25 et un, ou mieux, plusieurs échangeurs 26 dans le(s)quel(s) il chauffe l'oxygène.

Compte tenu des difficultés liées à l'acheminement de l'oxygène chaud, le chauffage de l'oxygène est réalisé de préférence à proximité des brûleurs dans lesquels cet oxygène est consommé. Pour cette raison, et du fait aussi qu'il est nécessaire de régler le débit de chaque brûleur, il est nécessaire de multiplier les échangeurs qui selon les cas alimentent chacun un ou un petit nombre de brûleurs.

A la figure 1 chaque brûleur 13 est alimenté par un échangeur 26.

L'air, après préchauffage de l'oxygène, est par exemple retourné au récupérateur 25. Il peut aussi être utilisé conjointement aux fumées, pour une opération de cogénération.

Dans ce schéma l'ensemble de l'oxygène est alimenté à partir d'un réservoir de stockage éventuellement relié à une centrale de production par gazoduc lorsque les conditions de distribution s'y prêtent.

La figure 2 schématise le principe de fonctionnement de base d'un four comprenant une unité de production d'oxygène par extraction sur membrane. Dans la suite il est question de l'ensemble de l'alimentation en oxygène par cette source particulière. Il est également possible de faire en sorte qu'une partie seulement de l'alimentation en oxygène provienne de ce mode de production. De préférence cependant l'alimentation est assurée à partir de l'oxygène extrait sur membrane pour au moins 50%.

Le four H comprend comme précédemment une série de brûleurs 13. Par mesure de clarté un seul d'entre eux est représenté. Le brûleur 13 est alimenté comme précédemment en combustible en 14. Il reçoit par ailleurs de l'oxygène chaud directement d'un extracteur à membrane 18. De façon accessoire, si la production de l'extracteur ne suffit pas à l'alimentation du brûleur au régime choisi, un apport supplémentaire d'oxygène peut être effectué directement au niveau du brûleur dans un injecteur qui peut être distinct de celui alimenté par l'oxygène produit par extraction. Cet apport est schématisé par la flèche O₂.

L'alimentation supplémentaire indiquée précédemment est aussi utile dans les opérations possibles de maintenance conduisant à interrompre momentanément l'extraction de l'oxygène sur un des dispositifs d'extraction. Dans ce cas pour ne pas perturber l'équilibre de fonctionnement du four, il est préférable de maintenir tous les brûleurs en opération, le cas échéant certains en régime réduit. L'alimentation de complément est alors momentanément la seule en activité sur le brûleur concerné.

Les fumées F sortant du four, comme précédemment, sont passées dans un échangeur E1. A titre indicatif pour un four de fusion produisant 600 tonnes de verre par jour, les fumées présentent un flux de 20000 Nm³/h à une température de l'ordre de 1200-1300°C.

L'échangeur E1, est choisi en dimensions et débit de telle sorte que les fumées qui en sortent F' soient encore à une température supérieure à 800°C. A ces températures il est avantageux de récupérer leur énergie par exemple dans un processus de cogénération.

Dans la représentation choisie les fumées circulent dans le même sens que le mélange gazeux caloporteur C qu'elles réchauffent. Le schéma représente un récupérateur comprenant un seul étage. En pratique il est constitué de plusieurs étages. L'échange dans E1 est réalisé par exemple avec de l'air entrant à température ambiante. A la sortie C' la température de l'air aussi élevée que possible ne dépasse pas néanmoins environ 750°C, compte tenu de la température de sortie des fumées. Dans le cas où une température plus élevée est préférée, la circulation dans l'échangeur E1 doit être aménagée à contre-courant.

Le flux d'air réchauffé peut atteindre 18500 Nm³/h. Il alimente une série d'échangeurs secondaires E2 dans lesquels circule par ailleurs de l'air A comprimé provenant d'un compresseur à turbine 16.

Après passage dans l'échangeur E2 bien que refroidi l'air C" reste encore à environ 450-520°C, et peut être utilisé également dans une unité de cogénération

L'air A sortant du compresseur 16 dont le débit est par exemple de 36 000Nm³/h est à une pression de l'ordre de 1,5 à 2.10⁶Pa et sa température s'élève à environ 300°C. Après passage dans l'échangeur E2 il sort en A' à environ 500-550°C. Il est avantageusement encore réchauffé par passage dans une chaudière 17, pour atteindre les températures les plus favorables pour l'extraction sur membrane. Il est porté par exemple à 900°C toujours aux conditions de pression établies au niveau du compresseur 16.

L'air chaud sous pression passe sur l'extracteur à membrane 18. L'oxygène extrait est dirigé immédiatement sur le brûleur 13. L'air appauvri en oxygène toujours sous pression de 1,5 à 2.10⁶Pa A", présente un flux de l'ordre de 30 000 Nm³/h et une température de l'ordre de 850°C, ceci dans le cas d'un rendement d'extraction d'oxygène de 80%.

Compte tenu de ses caractéristiques l'air appauvri A" est avantageusement utilisé pour activer la turbine du compresseur 16, et dégage encore éventuellement un excédent d'énergie qui peut aussi alimenter l'unité de cogénération.

L'air appauvri A" sortant de l'extracteur est avantageusement analysé au moyen d'une sonde 19 pour déterminer indirectement la quantité d'oxygène fournie au brûleur. Si nécessaire, un appoint d'oxygène est effectué directement sur le brûleur représenté par la flèche O₂.

La mise en oeuvre de la technique selon l'invention permet des gains économiques sensibles par rapport au fonctionnement du four alimenté par de l'oxygène dans les conditions qui sont celles dans lesquelles les industriels producteurs de gaz le fournissent. Le gain est néanmoins dépendant de l'efficacité des éléments mis en oeuvre. Dans ce bilan, interviennent de façon particulièrement significative l'efficacité de l'extraction de la membrane, et celle du turbocompresseur conditionnant le mélange gazeux dont l'oxygène est extrait.

Les installations d'extraction d'oxygène, dans les meilleures conditions de fonctionnement du type de celles indiquées précédemment, et dans la mesure où elles sont convenablement dimensionnées pour les débits envisagés, permettent d'atteindre des rendements qui ne sont pas inférieurs à 65%. Des rendements de l'ordre de 70-75% d'extraction sont raisonnablement accessibles. Les meilleures mises en oeuvre peuvent atteindre 80% d'extraction.

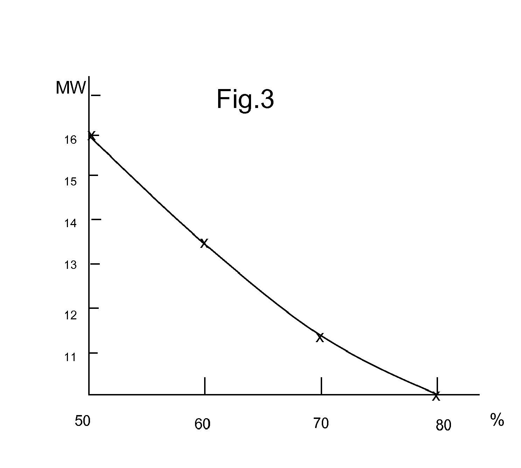

Une analyse de l'énergie nécessaire pour le fonctionnement de l'ensemble de production de l'oxygène dans le mode selon l'invention montre l'intérêt de procéder avec l'extraction la plus complète possible. La figure 3 illustre la puissance électrique nécessaire pour la production d'oxygène pour un four produisant 600 tonnes/jour de verre, en fonction du rendement d'extraction. La puissance se trouve réduite de 16MW à 10MW lorsque le rendement d'extraction passe de 50 à 80%.

Le rendement isentropique du turbocompresseur varie en fonction notamment de la température des gaz comprimés. Moins la température de sortie est élevée meilleur est le rendement. A 300°C celui-ci peut atteindre 90%, à 380°C il n'est que de 80%. Le choix d'une température pas trop élevé permet donc d'améliorer le rendement. En contrepartie il est nécessaire de réchauffer plus intensément le mélange gazeux. L'utilisateur dispose donc d'une certaine latitude en fonction des coûts respectifs de l'énergie mise en oeuvre dans ces différentes options, coût qui tient compte bien évidemment de l'énergie récupérable aux différents stades et de l'optimisation de son utilisation. De façon usuelle le rendement s'établit entre 75 et 90%.

L'analyse des systèmes comparés prend en considération le « coût » énergétique de la production d'oxygène par les moyens cryogéniques traditionnels d'une part et par les dispositifs d'extraction sur membrane. Les comparaisons sont effectuées en tenant compte des divers éléments permettant de récupérer l'énergie mise en oeuvre aux différents stades de l'utilisation tels qu'ils ont été décrits précédemment.

Hors investissement, les coûts énergétiques respectifs des productions de l'oxygène par cryogénie et par extraction sont déterminants de l'avantage économique obtenu. Dans tous les cas envisagés la mise en oeuvre de l'invention s'avère avantageuse dès que le rendement des membranes d'extraction dépasse 50%. Ce bénéfice croît bien évidemment avec le rendement de la membrane.
De façon globale le gain sur le coût de l'oxygène lorsque celui-ci est acheté aux fournisseurs, peut varier de 10 à 40%. L'oxygène représentant une part importante du coût de fonctionnement en oxy-combustion, la mise en oeuvre de l'invention s'avère très avantageuse.

## Revendications

1. Four de fusion du verre chauffé au moyen de brûleurs, dans lequel l'énergie de combustion est produite au moins partiellement par oxy-combustion, et dans lequel une partie au moins de l'oxygène utilisé dans les brûleurs est produit par séparation sur une membrane de séparation céramique à partir d'un mélange gazeux comprenant de l'oxygène, l'oxygène issu de la séparation étant directement conduit dans au moins un brûleur.

2. Four de fusion selon la revendication 1 dans lequel le débit d'oxygène alimentant le brûleur est réglé au moins en partie par une ou plusieurs des caractéristiques : température, pression, débit, du mélange gazeux dont l'oxygène est extrait sur la membrane céramique.

3. Four selon la revendication 2 dans lequel pour la séparation de l'oxygène sur la membrane le mélange gazeux est porté à une température au moins égale à 600°C et au plus égale à 950°C.

4. Four selon la revendication 2 ou la revendication 3 dans lequel pour la séparation de l'oxygène sur la membrane le mélange gazeux est sous une pression qui n'est pas inférieure à 1.10⁶Pa.

5. Four selon l'une des revendications précédentes dans lequel la mesure du flux d'oxygène issu de l'extraction sur membrane est déterminé par différence de teneur en oxygène du mélange gazeux entrant dans le dispositif d'extraction et celle du mélange gazeux après extraction sur la membrane.

6. Four selon la revendication 5 dans lequel la mesure de la teneur résiduelle en oxygène dans le mélange après extraction, est effectuée au moyen d'une sonde de type électrode d'oxyde céramique.

7. Four selon l'une des revendications précédentes dans lequel la régulation de l'alimentation en oxygène des brûleurs est en outre partiellement assurée au moyen d'oxygène additionnel provenant d'un réservoir.

8. Four selon la revendication 7 dans lequel l'alimentation additionnelle est effectuée directement par injection séparée dans le brûleur ou à proximité immédiate de celui-ci.

9. Four selon l'une des revendications 7 ou 8 dans lequel l'alimentation supplémentaire en oxygène est mise en oeuvre pour maintenir le brûleur lors d'interruption d'alimentation par l'oxygène extrait sur membrane.
